# EUROPEAN PATENT APPLICATION

(11) **EP 0 753 482 A1**
(43) Date of publication of application: **15.01.1997**
(21) Application number: 95304797.4
(22) Date of filing: 10.07.1995
(51) Int. Cl.: C01B 37/02, C01B 39/30, C01B 39/48, B01J 29/035, B01J 29/50, B01J 29/70

(54) **Zeolites and processes for their manufacture**

(71) Applicant: EXXON CHEMICAL PATENTS INC., Linden New Jersey 07036 (US)
(72) Inventor: Bons, Antonie Jan, 3010 Kessel-Lo (BE); Verduijn, Johannes Petrus, 3061 Leefdaal (BE)
(74) Representative: Darby, David Thomas

(57) **Abstract**

In MFI, MEL, Offretite and BEA zeolite manufacture, inorganic alkalinity is used to control particle size.

## Description

This invention relates to zeolites, and to processes for their manufacture. More especially, it relates to a method for the control of the particle size of the zeolite.

In International Application WO 93/08125, there is described a process for the manufacture of zeolites. In this process, a boiling aqueous synthesis mixture is prepared, the mixture comprising a source of silica and a basic organic structure directing agent in a proportion sufficient to cause substantially complete dissolution of the silica source. The synthesis mixture is then maintained at an elevated temperature, but at 120°C or lower, for a time sufficient to cause crystals of the desired zeolite, which may, for example, be an MFI, MEL or β zeolite, to form. The synthesis mixture may also comprise sources of other zeolite components, most importantly of aluminium and an alkali metal.

The crystal size may be varied by varying the crystallization temperature, the lower the temperature the smaller the particle size, temperatures within the range of 45°C to 85°C being preferred.

It has now been found that varying the alkalinity of the synthesis mixture varies the particle size of the resulting crystals, the particle size increasing with increased alkalinity. This finding is surprising since in the manufacture of zeolite L, as described in EP-A-219354 and in a paper in proceedings of the 9th International Zeolite Conference, 1992, page 297, by Xianping Meng et al, an increase in alkalinity results in a decrease in particle size.

The present invention provides the use, in the synthesis of an Offretite MFI, MEL, or β-type zeolite, of the alkalinity of the synthesis mixture to control the particle size of the zeolite.

Advantageously, variation in alkalinity is provided by variation in concentration of an inorganic ion, advantageously an alkali metal ion.

In Offretite synthesis, the crystal morphology depends on whether inorganic alkalinity is provided wholly by potassium or partly by potassium and partly by sodium. In such cases, the variation in concentration should retain the same source or sources of alkalinity, and where there is more than one source advantageously the proportions of sources are retained.

The synthesis mixture may, apart from the variation of the alkalinity, be that in commercial use or described in the literature for the manufacture of the relevant zeolite.

The zeolite produced by the process of the invention is primarily a silicate or an aluminosilicate. It is, however, within the scope of the invention to replace aluminium wholly, though preferably only partly, with gallium, and partly with boron, iron or other trivalent elements, and silicon may similarly be replaced by germanium or phosphorus.

The sources of the various elements required in the final product may be any of those in commercial use or described in the literature, as may the preparation of the synthesis mixture.

For example, the source of silicon may be, for example, silica or silicic acid powder, a silicate, e.g., an alkali metal silicate, or a tetraalkyl orthosilicate.

The source of aluminium if present may be, for example, aluminium metal, e.g., in the form of chips, hydrated alumina, a water-soluble aluminium salt, e.g., aluminium sulphate, or an alkoxide, e.g., aluminium isopropoxide.

The alkali metal ion source is advantageously sodium or potassium hydroxide.

The structure directing agent may be, for example, the hydroxide or a salt of tetramethylammonium (TMA), tetraethylammonium (TEA), triethylmethylammonium (TEMA), tetrapropylammonium (TPA), tetrabutylammonium (TBA), tetrabutylphosphonium (TBP), trimethylbenzylammonium (TMBA), trimethylcetylammonium (TMCA), trimethylneopentylammonium (TMNA), triphenylbenzylphosphonium (TPBP), bispyrrolidinium (BP), ethylpyridinium (EP), diethylpiperidinium (DEPP) or a substituted azoniabicyclooctane, e.g., methyl or ethyl substituted quinuclidine or 1,4-diazoniabicyclo(2,2,2)octane.

Preferred structure directing agents are the hydroxides of TMA (for Offretite), TEA (for β zeolite), TPA (for silicalite) and TBA (for MEL zeolite). The invention is especially suitable for the synthesis of silicalite 1.

Thermal treatment may take place for several hours to several weeks, at a temperature advantageously below 120°C, and preferably from 45 to 100°C.

It has been found that increasing the alkalinity supplied by an inorganic base (OH⁻₍ᵢ₎) to a mole ratio for OH⁻₍ᵢ₎:SiO₂ to about 0.10:1 provides only a relatively small rate of increase in particle size, from about 60 to about 100 nm for silicalite-1. Increasing the OH⁻₍ᵢ₎:SiO₂ mole ratio from 0.1:1 to 0.25:1 produces a very rapid increase, again in silicalite-1 of from 100 nm to 1000 nm (1 µm). Accordingly, it can be seen that the invention provides the facility to provide the zeolite over a very wide particle size range. Advantageously, the OH⁻₍ᵢ₎:SiO₂ ratio is varied up to a value of at most 0.35:1, preferably at most 0.3:1.

The zeolite produced by the process of the invention, if required after cation exchange and/or calcining, is suitable for use as a catalyst or catalyst support in numerous hydrocarbon conversions and is effective in hydrocarbon separations or adsorptions. The material may be used alone, or in admixture with other zeolites, in particulate form or in the form of a layer on a support, especially in the form of a membrane. Hydrocarbon conversions include, for example, cracking, reforming, hydrofining, aromatization, alkylation, isomerisation and hydrocracking.

The smaller particle size zeolites may be used as seeds in zeolite and zeolite membrane manufacture, for example, as described in International Application WO 93/08124 and WO 94/25151, the disclosure of these specifications, and that of WO 93/08125, being incorporated herein by reference.

The following Examples illustrate the invention.

### Example 1

A series of eight synthesis solutions was prepared by dissolving silicic acid powder (Baker 0324-5) in a boiling solution of tetrapropylammonium hydroxide (Fluka 88110) and, except for one solution, sodium hydroxide (Baker 0402). The solutions were boiled for 10 minutes to ensure maximum possible dispersion of the silica source, cooled to room temperature, and water loss corrected. The molar compositions of the synthesis solutions were
(0.0 to 1.07) Na₂O:1.53 (TPA)₂O:10 SiO₂:143 H₂O

The molar ratios of OH⁻₍ᵢ₎:SiO₂ were within the range of 0.0 to 0.254.

During cooling of the solutions to room temperature, those with OH⁻₍ᵢ₎:SiO₂ ratio of 0.148 or more became hazy and with the maximum alkali content the cold solutions were almost solid. On heating to the ageing temperature, however, all solutions became clear.

All the solutions were aged for 5 days at 80°C at atmospheric pressure without stirring.

The zeolite crystals resulting were washed with water to pH 10 and dried at 105°C for about 16 hours. X-ray diffraction showed that all products were excellently crystalline MFI; the effect of alkalinity on the crystal size (by scanning electron microscopy) is shown in the Table below.

| mole ratio, OH⁻/SiO₂ | silicalite-1 particle size, nm |
|---|---|
| 0.00 | 65 |
| 0.054 | 80 |
| 0.108 | 85 |
| 0.122 | 115 |
| 0.134 | 165 |
| 0.148 | 365 |
| 0.162 | 600 |
| 0.198 | 750 |
| 0.254 | 1000 |

### Example 2

This example illustrates the production of Offretite of varying particle size. The first synthesis mixture contained the following components.

| | Parts by Weight |
|---|---|
| KOH pellets, 87.4% wt purity (Baker) | 3.4 |
| TMAOH, 25% by weight in water (Fluka) | 108.52 |
| Al chips, 99.99% wt purity (Fluka) | 2.8924 |
| SiO₂ powder, 89.8% wt, 10.2% water (Baker) | 35.52 |
| (The TMAOH was contaminated with potassium.) | |

The KOH pellets were dissolved in the TMAOH solution in a glass beaker at room temperature, and the Al chips then dissolved in the resulting solution with stirring and gentle heat. After addition of the silica powder, the mixture was heated to boiling with stirring and kept at boiling point for 5 minutes. It was apparent that not all the silica had dissolved, some settling on the base of the glass beaker. The molar composition of the synthesis mixture, taking into account the potassium present in the TMAOH, was:
2.78 (TMA)₂O:0.98 K₂O:Al₂O₃:9.90 SiO₂:91H₂O

The OH⁻₍ᵢ₎:SiO₂ ratio was accordingly about 0.1:1.

The synthesis mixture was homogenized by vigorous stirring for several minutes, then immediately poured into a plastic bottle which was then placed in an oil bath, the open end of the bottle being connected to a reflux condenser. The oil bath was heated to 85°C, and maintained at that temperature over a period. The appearance of the mixture gradually changed, with the quantity of deposited silica reducing, while the mixture developed a whitish appearance. Heating was terminated after 160 hours, with the contents of the bottle whitish and more viscous than the starting mixture.

The product was washed several times, using a high speed centrifuge to decant the wash water, and dried overnight at 110°C. X-ray diffraction (XRD) showed an excellently crystalline pure Offretite, while scanning electron microscopy (SEM) showed particles uniform in shape and size, with maximum dimension about 200 nm.

### Example 3

A synthesis mixture was prepared as in Example 2 but omitting any deliberate additional of alkali metal hydroxide. Subsequent analysis showed, however, that the TMAOH was contaminated with K₂O to an extent of 1.83 wt. percent; it is believed that this small proportion of alkali metal suffices to ensure nanocrystalline product, by providing a synthesis mixture of the molar composition:
2.78 (TMA)₂O:0.47 K₂O:Al₂O₃:9.90 SiO₂:91 H₂O

The synthesis mixture was thermally treated as in Example 2. After 160 hours heating at 85°C, the crystallization was stopped. The originally inhomogeneous mixture changed during heating to a jelly; this, however, was transparent.

After washing using a 17500 rpm centrifuge, the product was suspended in the last wash water, a stable, colloidal, suspension resulting. A portion was evaporated to dryness and characterized by XRD and SEM. Although the diffractogram showed weak and broad peaks, the pattern was still recognizable as pure Offretite. SEM analysis showed that the product consisted of uniformly sized and shaped particles, about 45 nm x 20 nm.

Comparison of Examples 2 and 3 shows the reduction in particle size resulting from a reduction in potassium content.

## Claims

1. The use, in the synthesis of an MFI, MEL, Offretite, or β-type zeolite, of the alkalinity of the synthesis mixture to control the particle size of the zeolite.

2. The use as claimed in claim 1, wherein the particle size is controlled by the variation in concentration of an alkali metal ion source.

3. The use as claimed in claim 2, wherein the alkali metal ion source is sodium or potassium hydroxide.

4. The use as claimed in any one of claims 1 to 3, wherein the OH⁻₍ᵢ₎:SiO₂ ratio is varied up to 0.35:1.

5. The use as claimed in claim 4, wherein the ratio is varied up to 0.25:1.

6. A zeolite whenever prepared by the invention of any one of claims 1 to 5.

7. Use of a zeolite as claimed in claim 6, in particulate or layer form, in hydrocarbon conversions, separations or adsorptions.
